# EUROPEAN PATENT APPLICATION

(11) **EP 3 225 584 A1**
(43) Date of publication of application: **04.10.2017**
(21) Application number: 17163631.9
(22) Date of filing: 29.03.2017
(51) Int. Cl.: B66F 9/075, G05D 1/02, B66F 9/06

(54) **FORKLIFT**

(30) Priority: 30.03.2016 JP 2016069454
(71) Applicant: Kabushiki Kaisha Toyota Jidoshokki, Kariya-shi, Aichi 448-8671 (JP)
(72) Inventor: ICHINOSE, Makoto, Kariya-shi,, Aichi 448-8671 (JP); TANAKA, Minoru, Nakakute-shi,, Aichi 480-1192 (JP); TSUSAKA, Yuuji, Nagakute-shi,, Aichi 480-1192 (JP); FUJII, Akinobu, Nagakute-shi,, Aichi 480-1192 (JP)
(74) Representative: Winter, Brandl, Fürniss, Hübner, Röss, Kaiser, Polte - Partnerschaft mbB

(57) **Abstract**

A forklift (10) capable of carrying a load placed on a pallet (10) having two openings (110) into which a fork (22) of the forklift is inserted is provided. The forklift includes a sensor (26) configured to irradiate laser light toward a predetermined space (50) forward of the fork, and measure a distance from the sensor (26) to an object located in the predetermined space (50) based on reflected light of the laser light reflected by the object; and a processor (34) configured to identify positions of sidewalls of the two openings (110) of the pallet (100) that is to be lifted based on distance data measured by the sensor (26), the processor (34) being further configured to identify a center (M) of a front surface of the pallet (100) based on the positions of the sidewalls of the two openings (110).

## Description

### TECHNICAL FIELD

An art disclosed herein relates to a forklift capable of carrying a load placed on a pallet.

### BACKGROUND

There has been known an art of recognizing a pallet that is to be lifted by a sensor during a load-lifting operation by a forklift. In a forklift of Japanese Patent Application Publication No. 2013-230903, a relative position of a pallet with respect to the forklift is computed by allowing a two-dimensional laser rangefinder to measure distances to and angles with both ends of a front surface of the pallet in a width direction.

### SUMMARY

To perform an accurate load-lifting operation by a forklift, the forklift needs to be moved accurately to a lifting position of a pallet that is to be lifted. To do so, a relative position of the pallet with respect to the forklift needs to be detected accurately. In the forklift of Japanese Patent Application Publication No. 2013-230903, however, for example in a case where there is no space around the pallet, namely, in a case where an object exists in contact with a lateral surface of the pallet, or in a case where pallets are placed side by side without clearances therebetween, it had been difficult to detect both ends of the pallet in the width direction. If the relative position of the pallet cannot be detected, the forklift cannot be accurately positioned to the lifting position of the pallet. The disclosure herein provides an art that allows a relative position of a pallet with respect to a forklift to be accurately detected irrespective of what environment the pallet is placed in.

A forklift disclosed herein is capable of carrying a load placed on a pallet having two openings into which a fork of the forklift is inserted. The forklift comprises a sensor configured to irradiate laser light toward a predetermined space forward of the fork, and measure a distance from the sensor to an object located in the predetermined space based on reflected light of the laser light reflected by the object; and a processor configured to identify positions of sidewalls of the two openings of the pallet that is to be lifted based on distance data measured by the sensor, the processor being further configured to identify a center of a front surface of the pallet based on the positions of the sidewalls of the two openings.

Generally, in a lateral surface of a pallet on which a load is to be placed, two openings for fork inserting are provided for a load-lifting operation by a forklift. In the above-described forklift, the processor identifies the positions of the sidewalls of the two openings in the front surface (a surface facing the forklift) of the pallet, based on the distance data measured by the sensor. The two openings are provided at positions having a known positional relationship with the center of the front surface of the pallet (e.g., at positions symmetric with respect to the center), and hence the processor identifies the center and a direction of the front surface of the pallet based on the positions of the sidewalls of the two openings. As such, the positions of the two openings can be detected based on the distance data measured by the sensor, irrespective of the environment around the pallet. Accordingly, the relative position and direction of the pallet can be detected accurately. In other words, according to the forklift described above, the relative position and direction of the pallet with respect to the forklift can be detected accurately, irrespective of what environment the pallet is placed in. It should be noted that a sidewall of an opening in the disclosure herein means a surface located at an end of the opening in a horizontal direction when the pallet is placed with a broader surface put horizontally to a floor surface (i.e., a surface extending approximately vertically relative to a floor surface).

### BRIEF DESCRIPTION OF DRAWINGS

FIG. 1 is a perspective view that schematically shows a configuration of a forklift in an embodiment;
FIG. 2 is a diagram that schematically shows an example of a state in which laser light is scanned by the forklift in the embodiment;
FIG. 3 is a block diagram that shows a control configuration of the forklift in the embodiment;
FIG. 4 is a flowchart that shows a procedure of processing of identifying a position and a direction of a pallet by a controller of the forklift in the embodiment;
FIG. 5 is a diagram that shows a state in which distance data is being acquired by a sensor of the forklift in the embodiment;
FIG. 6 is a diagram for describing a method of extracting a group of points constituting a line from a group of observed points; and
FIG. 7 is a diagram that shows the pallet together with coordinate axes set for the pallet.

### DETAILED DESCRIPTION

Some of the features of an embodiment described below will be listed. It should be noted that the respective technical features described below are independent of one another, and useful solely or in combinations. The combinations thereof are not limited to those described in the claims as originally filed.
(Feature 1) In a forklift disclosed herein, a processor may be further configured to extract only distance data of a front surface of a pallet from distance data measured by a sensor, and identify a center and a direction of the front surface of the pallet based on positions of sidewalls of two openings identified by the extracted distance data. According to such a configuration, erroneous recognition of the positions of the sidewalls of the openings can be suppressed.
(Feature 2) The forklift disclosed herein may further comprise a movement mechanism configured to move a fork in a first direction. Moreover, the sensor may be attached to the fork, and be configured to scan laser light in a second direction orthogonal to the first direction and move along with the fork by the movement mechanism. According to such a configuration, distance data in a three-dimensional space can be acquired.
(Feature 3) In the forklift disclosed herein, the processor may be further configured to perform: (1) measuring distance data by scanning laser light in the second direction with the fork set at a predetermined position of the first direction; (2) in a case where the positions of the sidewalls of the openings of the pallet cannot be identified based on the measured distance data, moving the fork a predetermined distance in the first direction to a position, and measuring distance data at the position by scanning laser light in the second direction; and (3) repeating the moving and measuring of (2) until the positions of the sidewalls of the openings of the pallet can be identified. According to such a configuration, in a case where the position of the pallet in the first direction is unknown, the positions of the sidewalls of the openings can be identified.

### EMBODIMENT

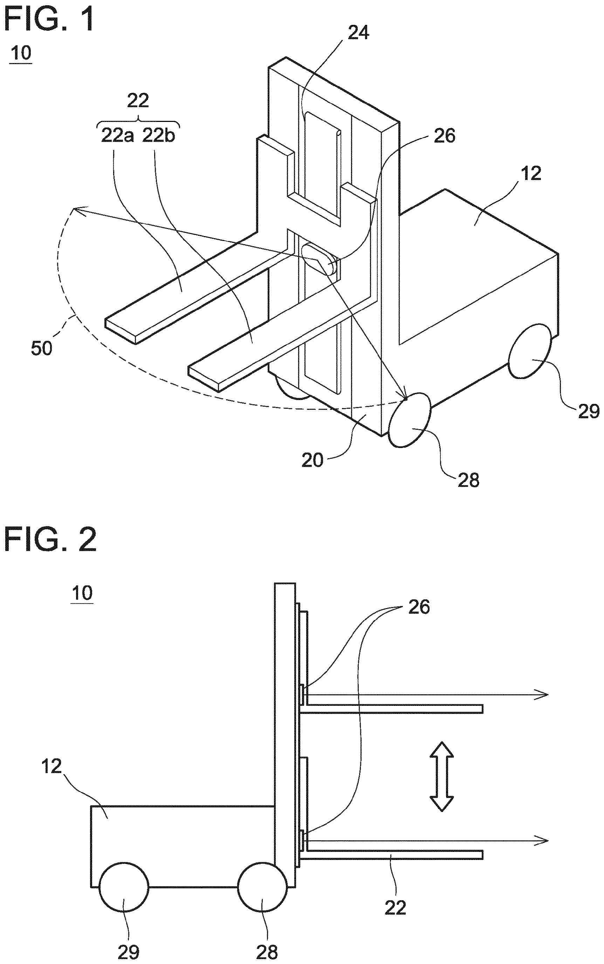

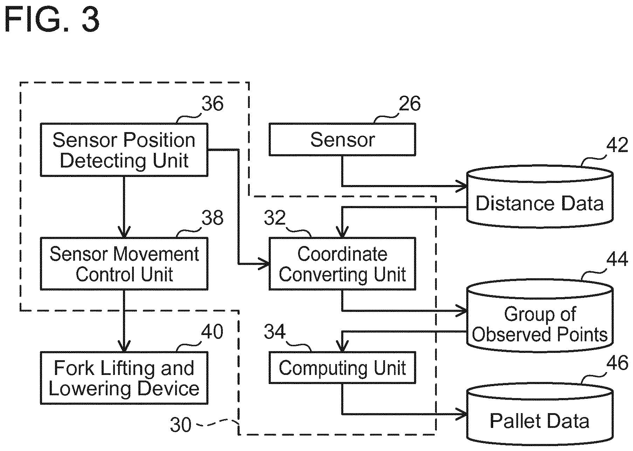

With reference to the drawings, a forklift 10 in an embodiment will hereinafter be described. As shown in FIG. 1, the forklift 10 is an unmanned forklift, and comprises a vehicle body 12, a mast 20, a fork 22, a lift chain 24, a sensor 26, and a controller 30 (shown in FIG. 3).

The vehicle body 12 comprises a front wheel 28 and a rear wheel 29 at each of both lateral surfaces. The front wheels 28 and the rear wheels 29 are rotatably supported to the vehicle body 12. One of the rear wheels 29 has a drive wheel motor (not shown) connected thereto via a drive mechanism, and is configured to be driven by the drive wheel motor to rotate. Moreover, the rear wheel 29 connected to the drive wheel motor is also connected to a steering device (not shown), and has an orientation of the rear wheel 29 adjusted by the steering device. The other of the rear wheels 29 is a caster wheel, and is rotated and steered following a movement of the vehicle body 12. By the controller 30 controlling the drive wheel motor and the steering device, the vehicle body 12 is allowed to run on a road and change its running direction.

The mast 20 is a post attached to a front surface of the vehicle body 12, and its axis extends in an upward-and-downward direction.

The fork 22 is attached to the mast 20 movably in the upward-and-downward direction. The fork 22 comprises a pair of tines 22a and 22b. The tines 22a and 22b are disposed at positions spaced apart from each other in a right-and-left direction of the vehicle body 12, and extend forward of the vehicle body 12 from a mast 20 side. It should be noted that the fork 22 may be swingable relative to the mast 20 by a tilting mechanism (not shown).

The lift chain 24 is provided at the mast 20, and engages with the fork 22. When the lift chain 24 is driven by a fork lifting and lowering device 40 (shown in FIG. 3), the fork 22 is accordingly lifted and lowered. A position of the fork 22 in the upward-and-downward direction can be identified by an amount by which the fork lifting and lowering device 40 drives the lift chain 24.

The sensor 26 is attached to the fork 22, and is lifted and lowered in the upward-and-downward direction together with the fork 22. A position to which the sensor 26 is attached is between the tine 22a and the tine 22b, and on a backward side (on a vehicle body 12 side) relative to a backrest surface of the fork 22. The sensor 26 is a one-dimensional scanning-type sensor that scans laser light in one direction (a horizontal direction in the present embodiment). The sensor 26 radiates laser light, and measures a distance to a peripheral object based on reflected light of the radiated laser light. The sensor 26 radiates the laser light to a region 50 having a predetermined angular range and set forward of the forklift 10 (see FIG. 1). Distance data in the horizontal direction is thereby acquired. The distance data acquired by the sensor 26 is inputted into the controller 30. Moreover, as the fork 22 is lifted and lowered, the sensor 26 is also lifted and lowered, and hence as shown in FIG. 2, a position, in a height direction, of the laser light radiated from the sensor 26 is changeable. Due to this, the distance data at an arbitrary height in a movable range of the fork 22 can be acquired by the sensor 26. As the sensor 26, UTM-30LX made by HOKUYO AUTOMATIC CO. LTD, LMS100 made by SICK AG, or the like can be used, for example. It should be noted that a position of the sensor 26 in the upward-and-downward direction can be identified by a sensor position detecting unit 36 (shown in FIG. 3).

The controller 30 is constituted of a microprocessor that comprises a CPU and the like. The controller 30 is mounted in the vehicle body 12. The controller 30 is connected to the sensor 26, the drive wheel motor that drives the one of the rear wheels 29, the steering device that adjusts a steering angle of the rear wheel 29 connected to the drive wheel motor, the fork lifting and lowering device 40 that lifts and lowers the fork 22, and the like, and controls their operations. In other words, the controller 30 controls the running direction and a running speed of the forklift 10 by driving the drive wheel motor and the steering device. Specifically, the controller 30 drives the one of the rear wheels 29 by outputting a control command value to the drive wheel motor and the steering device. Thereby, the running direction, the running speed, and a running path of the forklift 10 are controlled. Moreover, the controller 30 causes the fork 22 to move in the upward-and-downward direction by driving the fork lifting and lowering device 40. It should be noted that the running direction and the running speed of the forklift 10 can be controlled by conventionally known methods, and hence the detailed description thereof will be omitted.

Moreover, the controller 30 performs, by executing a program stored in a memory, processing of coordinate-converting the distance data acquired by the sensor 26, processing of identifying a position and a direction of a pallet 100 based on a group of coordinate-converted observed points, and the like. In other words, as shown in FIG. 3, the controller 30 functions as a coordinate converting unit 32 and a computing unit 34. By the controller 30 functioning as each of the coordinate conversion unit 32 and the computing unit 34, the group of observed points acquired from a space forward of the forklift 10 is generated, and based on the generated group of observed points, the position and the direction of the pallet 100 are identified. Details of the coordinate conversion unit 32 and the computer unit 34 will be described, along with the processing performed in the controller 30, which will hereinafter be described.

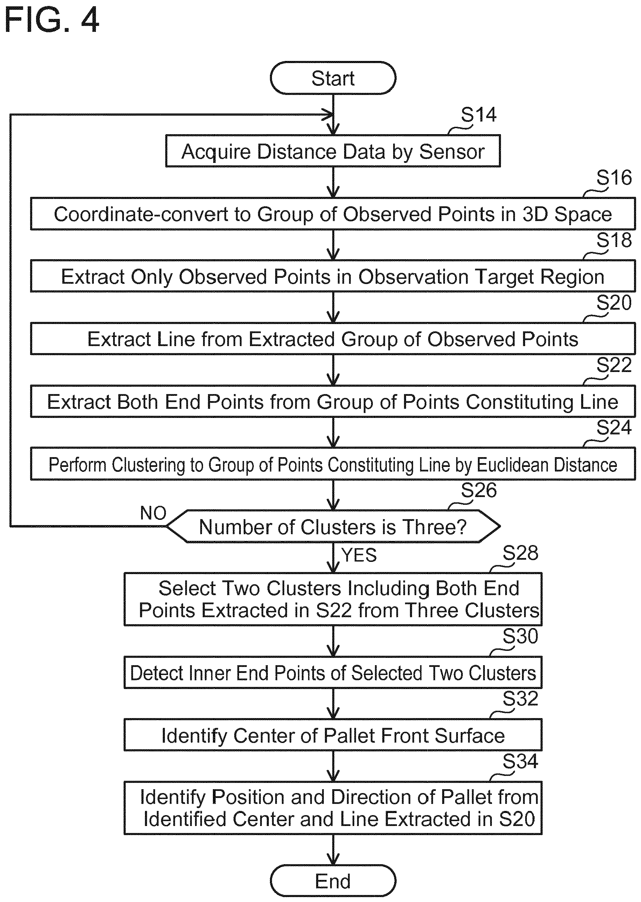

Next, the processing of identifying the position and the direction of the pallet 100 (pallet data 46) by the controller 30 will be described. This processing is performed in a vicinity of the pallet 100 that is to be lifted, where the pallet 100 is observable by the sensor 26. In other words, the controller 30 initially drives the one of the rear wheels 29 such that the pallet 100 is located forward of the vehicle body 12, and brings the forklift 10 closer to the pallet 100. In other words, to observe the pallet 100 by the sensor 26, the controller 30 moves the forklift 10 to an observation start position in the vicinity of the pallet 100. Regarding the forklift 10 that carries a load in a factory, for example, a position where the load (pallet 100) is placed is predetermined. Accordingly, the position where the forklift 10 starts observing the pallet 100 is predetermined based on the approximate position where the pallet 100 is placed. Therefore, the controller 30 automatically moves the forklift 10 to the predetermined observation start position. It should be noted that, if the forklift 10 is driven by a driver, the forklift 10 may be moved to the observation start position by the driver, and then the following processing (processing of step S14 and the subsequent steps shown in FIG. 4) may be started.

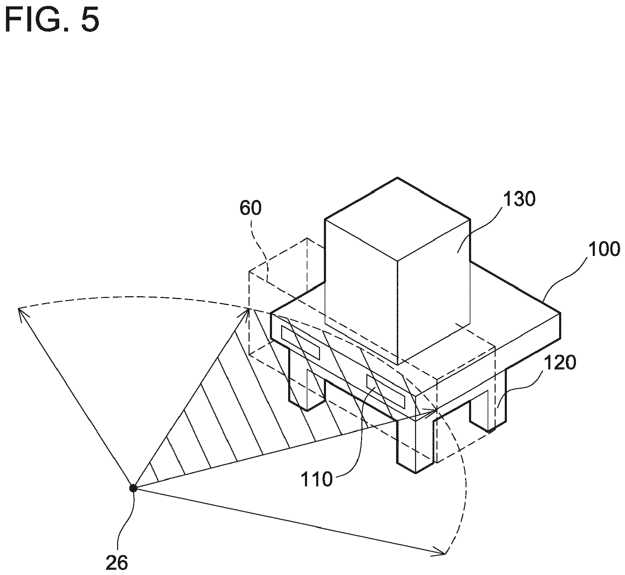

It should be noted that, while the forklift 10 moves to the observation start position, the sensor 26 is moved in the upward-and-downward direction by the fork lifting and lowering device 40 such that an observation target region 60 is irradiated with the laser light. The observation target region 60 refers to a region where there may be the pallet 100. Dimensions of the pallet 100 and a base or the like on which the pallet 100 is placed are known, and hence the position in the height direction where the pallet 100 exists (in details, the position in the height direction of a portion of the front surface of the pallet 100 where openings 110 are provided) can be preset. Specifically, as shown in FIG. 5, for example, if a load 130 is placed on the pallet 100 and the pallet 100 is placed on a base 120, the region where there may be the pallet 100 is determined by the dimensions of the base 120 and the pallet 100. Due to this, the controller 30 adjusts the height at which the laser light is radiated by driving the fork lifting and lowering device 40 such that the laser light is radiated at the height where the pallet 100 exists within the observation target region 60. It should be noted that a function of the controller 30 realized by this processing corresponds to a sensor movement control unit 38 shown in FIG. 3.

Next, the controller 30 acquires distance data 42 by the sensor 26 (S14). In other words, the sensor 26 radiates laser light while scanning the laser light in the horizontal direction, and detects reflected light of the radiated laser light. Thereby, the distance data 42 in a radiating direction of the laser light can be acquired.

Next, the controller 30 coordinate-converts the acquired distance data 42 into a group of observed points 44 in a three-dimensional space (S16). For example, the distance data 42 can be coordinate-converted into the group of observed points 44 based on: the distance data 42 acquired in step S14; a number of observation steps (number of measurement cycles (steps)) of the laser light of the sensor 26 and step intervals (scan angle in each observation step) of the laser light of the sensor 26; the position of the laser light in the height direction; and the like. It should be noted that the coordinate conversion can be performed using conventionally known methods, and hence the detailed description thereof will be omitted. The function of the controller 30 realized by the processing of step S16 described above corresponds to the coordinate conversion unit 32 shown in FIG. 3.

Next, the controller 30 extracts only observed points in the observation target region 60 from the acquired group of observed points 44 (S18). Due to this, observed points outside the observation target region 60 are excluded, and hence in the following processing, erroneous recognition of the pallet 100 can be prevented.

Next, the controller 30 extracts a line from the extracted group of observed points (S20). In other words, a group of observed points made by the reflected light reflected from the front surface of the pallet 100 is located on a same plane. Due to this, in step S20, a line that is a result of scanning the front surface of the pallet 100 is extracted from the group of observed points extracted in step S18. It should be noted that, for the extraction of the line, a known algorithm referred to as robust estimation, such as RANSAC (random sample consensus) can be used, for example.

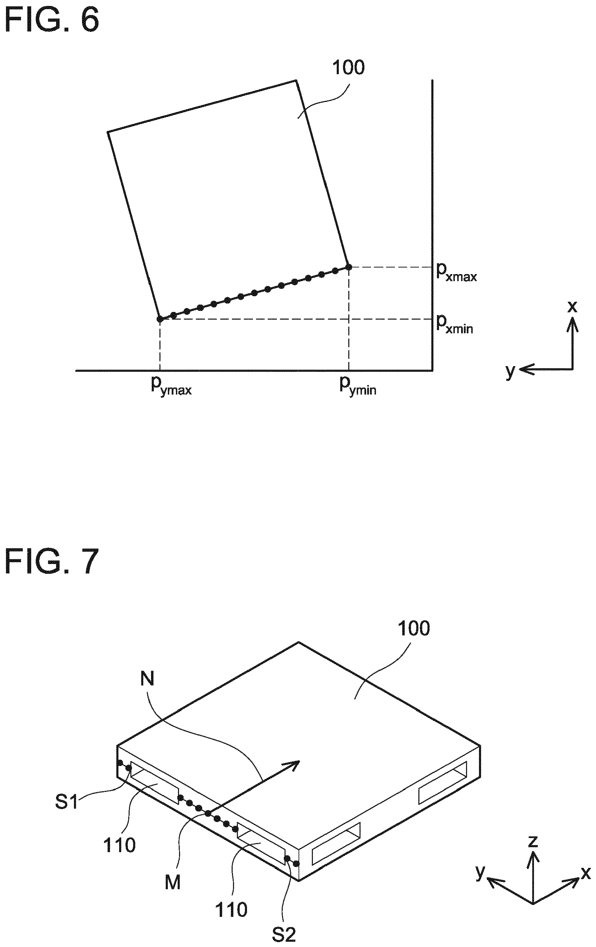

Next, the controller 30 extracts positions of both end points among the group of points constituting the line extracted in step S20 (S22). For example, as shown in FIG. 6, the positions of both the end points can be found from positions of observed points among the group of points constituting the line, i.e., a point having a maximum value pₓₘₐₓ in a x direction and a minimum value p_{ymin} in a y direction, and a point having a minimum value pₓₘᵢₙ in the x direction and a maximum value p_{ymax} in the y direction.

Next, the controller 30 performs clustering to the group of points constituting the extracted line (matching the line) by a Euclidean distance (S24). Here, as shown in FIG. 7, the front surface of the pallet 100 has the two openings 110 (holes into which the tines 22a and 22b of the fork 22 are to be inserted) provided therein. Accordingly, there is a possibility that the line extracted from the front surface of the pallet 100 may be divided by the openings 110 in the front surface of the pallet 100. Due to this, it is determined as to whether or not the group of points constituting the line extracted in step S20 is divided by a distance that corresponds to a width of each of the openings 110 of the pallet 100. It should be noted that, for the clustering, the conventionally known method such as a k-means method or a Ward's method can be used, for example.

Next, the controller 30 performs processing of step S26. Specifically, the controller 30 initially counts a number of lines obtained through the clustering (i.e., number of clusters), and determines whether or not the counted number of clusters is three (S26). As mentioned above, at the positions (height) where the openings 110 are provided in the front surface of the pallet 100, the line (group of observed points) that extends approximately in the horizontal direction due to the horizontal scan of the laser light is divided by the openings 110 into three sections. Accordingly, in step S26, by determining whether or not the number of clusters is three, it can be determined whether or not the extracted line corresponds to the front surface of the pallet 100 (in details, a portion of the front surface of the pallet 100 that corresponds to the positions (height) of the openings 110). In a case where the number of clusters is three (S26: YES), the controller 30 proceeds to step S28. On the other hand, in a case where the number of clusters is not three (S26: NO), the controller 30 returns to step S14, and performs the processing of acquiring the distance data 42 again. In other words, the controller 30 performs the distance measurement by the sensor 26 (processing in S 14 and the subsequent steps) again. It should be noted that the controller 30 may be configured to determine, in a case where the determination of NO is repeated a predetermined number of times in the processing in step S26, that the pallet 100 does not exist in the observation target region 60, and terminate the processing.

Next, the controller 30 selects two clusters that respectively include one and the other points of the both end points extracted in step S22 out of the three clusters of points (S28). In other words, the controller 30 selects two clusters located on an outer side, out of the three clusters.

Next, the controller 30 detects, from each of the selected two clusters, a position of a respective end point (i.e., an inner end point) that is not extracted in step S22 (S30). The positions of the inner end points are positions S1 and S2 of sidewalls of the openings 110 of the pallet 100 (shown in FIG. 7). In other words, in step S30, the controller 30 detects each of the positions S1 and S2 of the sidewalls of the two openings 110 in the pallet 100. It should be noted that there may be a case where the positions of the outer end points of the selected two clusters cannot be detected accurately due to an influence of noise of an occlusion boundary. On the other hand, the positions S1 and S2 of the inner end points of the two selected clusters are less likely to be influenced by the noise of the occlusion boundary, and detection accuracy therefor can be improved.

Next, the controller 30 identifies a center M of the front surface of the pallet 100 from the positions of the two inner points detected in step S30 (S32). The two openings 110 of the pallet 100 are provided at positions symmetric with respect to the center M of the front surface of the pallet 100. Therefore, it is possible to identify the center M of the front surface of the pallet 100 by finding a midpoint between the position S1 and the position S2 of the sidewalls of the openings 110 in the pallet 100.

Next, the controller 30 identifies the position and the direction of the pallet 100 from the center M of the front surface of the pallet 100 identified in step S32, and the line extracted in step S20 (S34). Specifically, as shown in FIG. 7, by finding a normal vector N of the extracted line on an xy plane, the direction of the pallet 100 can be found. Thereby, the position and the direction of the pallet 100 (the pallet data 46) can be identified. It should be noted that a function of the controller 30 realized by the processing in steps S18 to S34 described above corresponds to the computing unit 34 shown in FIG. 3.

In the forklift 10 in the above-mentioned embodiment, the controller 30 identifies the positions S1 and S2 of the sidewalls of the two openings 110 in the front surface of the pallet 100, based on the distance data 42 measured by the sensor 26. The two openings 110 are provided at the positions symmetric with respect to the center M of the front surface of the pallet 100, and hence the controller 30 can identify the center M of the front surface of the pallet 100 based on the positions S1 and S2 of the sidewalls of the two openings 110. As such, the positions of the two openings 110 can be detected based on the distance data 42 measured by the sensor 26, irrespective of presence or absence of a space around the pallet 100. Accordingly, relative position and direction of the pallet 100 with respect to the forklift 10 can be detected accurately. In other words, the position and the direction of the pallet 100 can be identified, irrespective of what environment the pallet 100 is placed in.

It should be noted that, although the above-mentioned embodiment has been described on the assumption that the position in the height direction where the pallet 100 exists is known, the position and the direction of the pallet 100 can be identified even in a case where the position in the height direction where the pallet 100 exists is unknown. Specifically, the controller 30 initially moves the forklift 10 to the observation start position while moving the sensor 26 by the fork lifting and lowering device 40 such that laser light is radiated to an upper limit of the observation target region 60. Next, the controller 30 acquires the distance data 42 by the sensor 26 while lowering the fork 22. Subsequently, the controller 30 performs the processing of steps S16 to S24 of the above-mentioned embodiment. Afterwards, in the case where the determination of NO (i.e., the number of clusters being not three) is made in the processing of the subsequent step S26, the controller 30 determines that the current height is not the height where the openings 110 of the pallet 100 exist, and acquires the distance data 42 by the sensor 26 while lowering the fork 22 again. On the other hand, in the case where the determination of YES (i.e., the number of clusters being three) is made in the processing of step S26, the controller 30 determines that the current height is the height where the openings 110 of the pallet 100 exist. After performing the processing described above, by performing the processing of step S28 and the subsequent steps of the above-mentioned embodiment, the controller 30 can identify the position and the direction of the pallet 100.

Correspondence relationships between the above-mentioned embodiment and the claims will be described. The fork lifting and lowering device 40 is an example of a movement mechanism in the claims. The computing unit 34 is an example of a processor in the claims.

While the embodiment of the technique disclosed herein have been described above in detail, this is merely illustrative and places no limitation on the scope of the claims. The technique described in the claims also encompasses various changes and modifications to the specific example described above.

For example, in the above-mentioned embodiment, the controller 30 selects, in step S28, two clusters each include a respective end point of a group of points constituting a line, however, the processing of step S28 may be modified such that the controller 30 selects a central cluster out of the three clusters in step S28. In this case, the processing at the following step S30 may be modified such that the controller 30 extracts two points being both ends of the central cluster (an inner sidewall of each of the openings 110), finds a position of a midpoint between the two points, and the center M of the front surface of the pallet 100 can be identified.

Moreover, a three-dimensional image of a range irradiated with laser light may be generated based on the distance data 42 measured by the sensor 26 by scanning the laser light in the horizontal direction while moving the fork 22 in the upward-and-downward direction by driving the fork lifting and lowering device 40. Specifically, the controller 30 initially may scan laser light radiated from the sensor 26 two-dimensionally, namely in the horizontal direction and the height direction, by radiating the laser light to the region 50 that is set forward of the forklift 10 and has the predetermined angular range, while lifting and lowering the sensor 26 in the upward-and-downward direction. Next, the controller 30 may acquire the distance data 42 of a three-dimensional space forward of the forklift 10, from the reflected light of the laser light. Then, the controller 30 may identify, from the three-dimensional image generated based on this distance data 42, the positions S1 and S2 of the sidewalls of the openings 110 of the pallet 100. Even with such a configuration, the positions S1 and S2 of the sidewalls can be identified, and hence the center of the front surface of the pallet 100 can be identified preferably.

The respective technical features described herein or in the drawings are independent of one another, and useful solely or in combinations. The combinations thereof are not limited to those described in the claims as originally filed. Further, the art described herein and the drawings may concurrently achieve a plurality of aims, and technical significance thereof resides in achieving any one of such aims.

## Claims

1. A forklift (10) capable of carrying a load placed on a pallet (100) having two openings (110) into which a fork (22) of the forklift (10) is inserted, the forklift (10) comprising:
a sensor (26) configured to irradiate laser light toward a predetermined space (50) forward of the fork (22), and measure a distance from the sensor (26) to an object located in the predetermined space (50) based on reflected light of the laser light reflected by the object; and
a processor (34) configured to identify positions of sidewalls of the two openings (110) of the pallet (100) that is to be lifted based on distance data (42) measured by the sensor (26), the processor (34) being further configured to identify a center (M) of a front surface of the pallet (100) based on the positions of the sidewalls of the two openings (110).

2. The forklift (10) according to claim 1, wherein
the processor (34) is further configured to extract only distance data of the front surface of the pallet (100) from the distance data (42) measured by the sensor (26), and identify the center (M) of and a direction of the front surface of the pallet (100) based on the positions of the sidewalls of the two openings (110) identified by the extracted distance data.

3. The forklift (10) according to claim 1 or 2, further comprising
a movement mechanism (40) configured to move the fork (22) in a first direction; wherein
the sensor (26) is provided on the fork (22) and is configured to scan laser light in a second direction orthogonal to the first direction, and move along with the fork (22) by the movement mechanism (40).

4. The forklift (10) according to claim 3, wherein
the processor (34) is further configured to perform:
(1) measuring distance data (42) by scanning laser light in the second direction with the fork (22) set at a predetermined position of the first direction;
(2) in a case where the positions of the sidewalls of the two openings (110) of the pallet (100) cannot be identified based on the measured distance data (42), moving the fork (22) a predetermined distance in the first direction to a position, and measuring distance data (42) at the position by scanning laser light in the second direction; and
(3) repeating the moving and measuring of (2) until the positions of the sidewalls of the two openings (110) of the pallet (100) can be identified.
